# EUROPEAN PATENT APPLICATION

(11) **EP 4 678 411 A1**
(43) Date of publication of application: **14.01.2026**
(21) Application number: 25184115.1
(22) Date of filing: 20.06.2025
(51) Int. Cl.: B60C 1/00, C08L 9/00, C08L 9/06

(54) **RUBBER COMPOSITION AND PNEUMATIC TIRE**

(30) Priority: 11.07.2024 JP 2024111416; 11.07.2024 JP 2024111460
(71) Applicant: Toyo Tire Corporation, Itami-shi, Hyogo 664-0847 (JP)
(72) Inventor: HASHIMOTO, Akari, ITAMI-SHI, HYOGO, 664-0847 (JP); KIMURA, Takayoshi, ITAMI-SHI, HYOGO, 664-0847 (JP)
(74) Representative: Cabinet Beau de Loménie

(57) **Abstract**

A rubber composition comprising, per 100 parts by mass of a rubber component containing styrene-butadiene rubber whose glass transition point is -70°C to -20°C and butadiene rubber, 0.1 to 10 parts by mass of a compound represented by the following general formula (1): 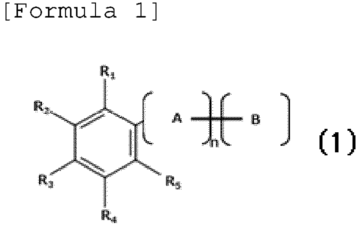 wherein at least one of R₁ to R₅ is an -OH group or an -OCH₃ group and others are each an -H group or a hydrocarbon group having 1 to 20 carbon atoms, A is an unsaturated bond or an alkylene group having 1 to 20 carbon atoms and optionally having an -H group, a -CH₃ group, an -NH₂ group, an -O- group, or an -OH group, n is an integer of 0 to 10, and B is a -COOH group, an -OH group, or an =O group and optionally forms a ring structure with adjacent R₁ or R₅.

## Description

### Field of the Invention

The present invention relates to a rubber composition and a pneumatic tire including a rubber part containing a vulcanized rubber of the rubber composition.

### Description of the Related Art

Pneumatic tires are used in a variety of driving conditions, for example on wet road surfaces with rain (wet road surface) and on road surfaces covered with snow (snow road surface). Therefore, tires are required to improve wet grip performance which is grip performance on wet road surfaces (hereinafter, simply referred to as "WET grip performance") and braking performance which is braking performance on snow road surfaces (hereinafter, simply referred to as "SNOW performance"). One of the methods for improving the former is to increase tanδ, particularly tanδ at 0°C (tanδ (0°C)), of the vulcanized rubber, and one of the methods for improving the latter is to reduce the storage modulus E' at a low temperature (e.g.,-5°C) of the vulcanized rubber.

Incidentally, Patent Document 1 below describes a rubber composition containing a predetermined amount of a specific compound per 100 parts by mass of the total amount of the rubber component for the purpose of improving heat aging resistance of a vulcanized rubber.

### Prior Art Document

### Patent Document

Patent Document 1: JP-A-2023-089553

### SUMMARY OF THE INVENTION

The vulcanized rubber of the rubber composition described in Patent Document 1 is excellent in heat aging resistance, but as a result of intensive studies by the present inventors, it has been found that there is room for further improvement in terms of WET grip performance and snow performance in order to use the vulcanized rubber as a rubber part of a pneumatic tire running on wet road surface and on snow road surface.

In view of the above circumstances, it is an object of the present invention to provide a rubber composition as a raw material of a vulcanized rubber excellent in WET grip performance and snow performance, especially when used as a rubber part of a pneumatic tire running on wet road surface or snow road surface.

Further, an object of the present invention is to provide a pneumatic tire, especially a snow tire which is excellent in WET grip performance and snow performance.

The above object can be achieved by the present invention as described below. Specifically, the present invention relates to a rubber composition (1) containing, per 100 parts by mass of a rubber component containing styrene-butadiene rubber whose glass transition point is - 70°C to -20°C and butadiene rubber, 0.1 to 10 parts by mass of a compound represented by the following general formula (1): 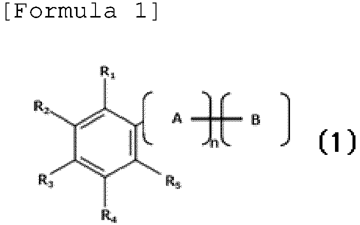 wherein at least one of R₁ to R₅ is an -OH group or an -OCH₃ group and others are each an -H group or a hydrocarbon group having 1 to 20 carbon atoms, A is an unsaturated bond or an alkylene group having 1 to 20 carbon atoms and optionally having an -H group, a -CH₃ group, an -NH₂ group, an -O- group, or an -OH group, n is an integer of 0 to 10, and B is a -COOH group, an -OH group, or an =O group and optionally forms a ring structure with adjacent R₁ or R₅.

The rubber composition (1) is preferably a rubber composition (2) containing 20 to 150 parts by mass of carbon black per 100 parts by mass of the rubber component.

The rubber composition (1) or (2) is preferably a rubber composition (3) further containing at least one of natural rubber and isoprene rubber as the rubber component.

Any one of the rubber compositions (1) to (3) is preferably a rubber composition (4) in which the compound represented by the general formula (1) is a naturally occurring compound.

Any one of the rubber compositions (1) to (4) is preferably a rubber composition (5) in which the compound represented by the general formula (1) is at least one of 3,4-dihydroxycinnamic acid and 3,4-dimethoxycinnamic acid.

The present invention also relates to a pneumatic tire (6) including a rubber part containing a vulcanized rubber of any one of the rubber compositions (1) to (5). Moreover, the present invention also relates to a snow tire (7) including a vulcanized rubber of the rubber compositions (1) to (5).

In addition, the above object can be achieved by the present invention as described below. That is, the present invention relates to a rubber composition (8) containing, per 100 parts by mass of a rubber component containing styrene-butadiene rubber whose glass transition point is - 70°C to -20°C and butadiene rubber, 0.1 to 10 parts by mass of a compound having an XLogP of 0.5 or more and 10 or less.

The rubber composition (8) is preferably a rubber composition (9) containing 20 to 150 parts by mass of carbon black per 100 parts by mass of the rubber component.

The rubber composition (8) or (9) is preferably a rubber composition (10) further containing at least one of natural rubber and isoprene rubber as the rubber component.

Any one of the rubber compositions (8) to (10) is preferably a rubber composition (11) in which the compound having an XLogP of 0.5 or more and 10 or less is a naturally occurring compound.

Any one of the rubber compositions (8) to (11) is preferably a rubber composition (12) in which the compound having an XLogP of 0.5 or more and 10 or less is at least one of 3,4-dihydroxycinnamic acid and 3,4-dimethoxycinnamic acid.

The present invention also relates to a pneumatic tire (13) including a rubber part containing a vulcanized rubber of any one of the rubber compositions (8) to (12). Moreover, the present invention also relates to a snow tire (14) including a vulcanized rubber of the rubber compositions (8) to (12).

The rubber composition according to the present invention contains the compound represented by the general formula (1) in a rubber component containing styrene-butadiene rubber whose glass transition point is -70°C to - 20°C and butadiene rubber. As a result, WET grip performance and snow performance of the finally produced vulcanized rubber are dramatically improved. The reason for achieving such an effect is considered as follows.

The compound represented by the general formula (1) has high hydrophilicity, and thus tends to aggregate in the rubber component, so that the viscosity of the rubber composition increases. Therefore, a high shear state of the rubber composition can be maintained while suppressing an excessive temperature increase during rubber kneading. As a result, the reaction between the compound represented by the general formula (1) and the rubber component proceeds at a high level, so that the rubber hardness of the finally obtained vulcanized rubber increases, and tanδ, particularly tanδ at 0°C (tanδ (0°C)) increases. In addition, since the rubber composition according to the present invention contains, as the rubber component, styrene-butadiene rubber whose glass transition point is - 70°C to -20°C and butadiene rubber, it is possible to reduce the storage modulus E' at a low temperature (e.g. - 5°C) of the finally obtained vulcanized rubber. As a result, it is considered that the WET grip performance and the snow performance of the vulcanized rubber are improved.

The rubber composition according to the present invention contains a compound having an XLogP of 0.5 or more and 10 or less in a rubber component containing styrene-butadiene rubber whose glass transition point is - 70°C to -20°C and butadiene rubber. As a result, the WET grip performance and the snow performance of the finally produced vulcanized rubber are dramatically improved. The reason for achieving such an effect is considered as follows.

The compound having an XLogP of 0.5 or more and 10 or less has moderate hydrophilicity, and thus tends to aggregate in the rubber componen, so that the viscosity of the rubber composition increases. Therefore, a high shear state of the rubber composition can be maintained while suppressing an excessive temperature increase during rubber kneading. As a result, the reaction between the compound having an XLogP of 0.5 or more and 10 or less and the rubber component proceeds at a high level, so that the rubber hardness of the finally obtained vulcanized rubber increases, and tanδ, particularly tanδ at 0°C (tanδ (0°C)) increases. In addition, since the rubber composition according to the present invention contains, as the rubber component, styrene-butadiene rubber whose glass transition point is -70°C to -20°C and butadiene rubber, it is possible to reduce the storage modulus E' at a low temperature (e.g. -5°C) of the finally obtained vulcanized rubber. As a result, it is considered that the WET grip performance and the snow performance of the vulcanized rubber are improved. In the present invention, when a compound having an XLogP of less than 0.5 is used, it is considered that the compound has too high hydrophilicity and the dispersion of a filler is deteriorated. On the other hand, when a compound having an XLogP of more than 10 is used, it is considered that the compound has low hydrophilicity, and thus has good compatibility with rubber, so that a high shear state cannot be maintained.

Since the vulcanized rubber of the rubber composition according to the present invention is excellent in WET grip performance and snow performance, it is useful as a raw material for pneumatic tires, especially snow tires.

### DETAILED DESCRIPTION OF THE PREFERRED EMBODIMENTS

Examples of the rubber composition according to the present invention include the following first embodiment and second embodiment.

### [First embodiment]

The rubber composition according to the first embodiment of the present invention contains, per 100 parts by mass of the rubber component containing styrene-butadiene rubber whose glass transition point is -70°C to - 20°C and butadiene rubber, 0.1 to 10 parts by mass of a compound represented by the following general formula (1): 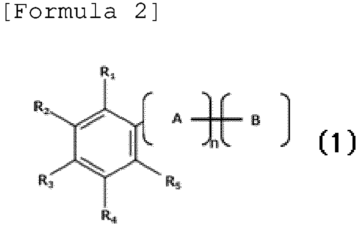 wherein at least one of R₁ to R₅ is an -OH group or an -OCH₃ group and others are each an -H group or a hydrocarbon group having 1 to 20 carbon atoms, A is an unsaturated bond or an alkylene group having 1 to 20 carbon atoms and optionally having an -H group, a -CH₃ group, an -NH₂ group, an -O- group, or an -OH group, n is an integer of 0 to 10, and B is a -COOH group, an -OH group, or an =O group and optionally forms a ring structure with adjacent R₁ or R₅. The content of the compound represented by the general formula (1) is more preferably 0.5 to 5 parts by mass per 100 parts by mass of the total amount of the rubber component.

The use of a naturally occurring compound as the compound represented by the general formula (1) is more preferred in terms of environmental protection. Examples of the naturally occurring compound include 3,4-dihydroxycinnamic acid (caffeic acid), 3,4-dimethoxycinnamic acid, curcumin, sesamol, coumaric acid, ferulic acid, sinapinic acid, chlorogenic acid, rosmarinic acid, 4-(4-hydroxy-3-methoxyphenyl)-2-butanone, naringin, hesperidin, quercetin, and tocopherol. In the present invention, among these compounds, at least one of 3,4-dihydroxycinnamic acid (caffeic acid) and 3,4-dimethoxycinnamic acid is more preferably used from the viewpoint of improving the steering stability and the WET grip performance of the vulcanized rubber. The reason why the use of at least one of 3,4-dihydroxycinnamic acid and 3,4-dimethoxycinnamic acid improves the WET grip performance and the snow performance of the vulcanized rubber is not known, but there may be, for example, the following reasons (1) to (3).
(1) When 3,4-dihydroxycinnamic acid and/or 3,4-dimethoxycinnamic acid are added together with a zinc compound such as zinc oxide to the rubber composition used as a raw material, two or more molecules of 3,4-dihydroxycinnamic acid or 3,4-dimethoxycinnamic acid coordinate to zinc through hydroxy groups or methoxy groups at R₂ and R₃ positions in the rubber composition so that the molecular weight increases due to the formation of a complex;
(2) when two or more molecules of 3,4-dihydroxycinnamic acid or 3,4-dimethoxycinnamic acid form a complex, the tendency to aggregate in the rubber composition is further enhanced, so that the viscosity of the rubber composition is more effectively increased; and
(3) As a result of the viscosity increase of the rubber composition occurring more effectively, the reaction of the compound described in the general formula (1) with the rubber component proceeds more effectively, so that the rubber hardness of the finally obtained vulcanized rubber is further increased, and the storage modulus E' of the vulcanized rubber at a low temperature (e.g. -5°C) can be further reduced while the tan δ, particularly tan δ (tan δ (0°C) at °C, is further increased. Consequently, the WET grip performance and the snow performance of vulcanized rubber may be further improved.

It is to be noted that a non-naturally occurring compound may be also used as the compound represented by the general formula (1). Examples of the non-naturally occurring compound include 2,3-dimethoxycinnamic acid, 2,4-dimethoxycinnamic acid, 2,5-dimethoxycinnamic acid, 2,3,4-tritoxycinnamic acid, 3,4,5-tritoxycinnamic acid, protocatechuic acid, 3-(3,4-dihydroxyphenyl)-L-alanine, 5,5',6,6'-tetrahydroxy-3,3,3',3'-tetramethyl-1,1'-spirobiindane, carvacrol, 3,4-dimethoxyhydrocinnamic acid, 5,6-dimethoxy-1-indanone, and 3,4-dihydroxyhydrocinnamic acid.

The rubber composition of the present invention contains styrene-butadiene rubber (SBR) whose glass transition point is -70°C to -20°C and butadiene rubber (BR). When the total amount of the rubber component is set to 100 parts by mass, the blending amount of the styrene-butadiene rubber whose glass transition point is -70°C to - 20°C is preferably 20 to 80 parts by mass, more preferably 40 to 70 parts by mass. When the total amount of the rubber component is set to 100 parts by mass, the blending amount of the butadiene rubber is preferably 20 to 80 parts by mass, more preferably 30 to 60 parts by mass. In the rubber composition according to the present invention, at least one of natural rubber and isoprene rubber are preferably contained as the rubber component, and the blending amount of at least one of natural rubber and isoprene rubber is preferably 5 to 30 parts by mass. In the rubber composition according to the present invention, as a rubber component, a diene-based rubber other than styrene-butadiene rubber whose glass transition point is - 70°C to -20°C, butadiene rubber, natural rubber and isoprene rubber, for example acrylonitrile-butadiene rubber (NBR), chloroprene rubber (CR), styrene-isoprene copolymer rubber, butadiene-isoprene copolymer, styrene-isoprene-but adiene copolymer rubber may be contained.

When the rubber composition according to the present invention contains silica, the WET gripping performance and the snow performance of vulcanized rubbers are further improved, since dispersibility of silica in the rubber composition improves due to the compound described in the general formula (1). Examples of the silica to be used include silicas usually used for rubber reinforcement, such as wet silica, dry silica, sol-gel silica, and surface-treated silica. Among these, wet silica is preferred.

When silica is contained as a filler, a silane coupling agent is also preferably contained together. The silane coupling agent is not limited as long as sulfur is contained in the molecule thereof, and various silane coupling agents to be added to rubber compositions together with silica may be used. Examples of such silane coupling agents include: sulfidesilanes such as bis(3-triethoxysilylpropyl)tetrasulfide (e.g., "Si69" manufactured by Degussa), bis(3-triethoxysilylpropyl)disulfide (e.g., "Si75" manufactured by Degussa), bis(2-triethoxysilylethyl)tetrasulfide, bis(4-triethoxysilylbutyl)disulfide, bis(3-trimethoxysilylpropyl)tetrasulfide, and bis(2-trimethoxysilylethyl)disulfide; mercaptosilanes such as γ-mercaptopropyltrimethoxysilane, γ-mercaptopropyltriethoxysilane, mercaptopropylmethyldimethoxysilane, mercaptopropyldimethylmethoxysilane, and mercaptoethyltriethoxysilane; and protected mercaptosilanes such as 3-octanoylthio-1-propyltriethoxysilane and 3-propionylthiopropyltrimethoxysilane.

The rubber composition according to the present invention may contain, as a filler, carbon black. Examples of the carbon black that can be used include: carbon blacks usually used in the rubber industry, such as SAF, ISAF, HAF, FEF, and GPF; and conductive carbon blacks such as acetylene black and ketjen black. Among them, carbon black having N2SA of 140 to 250 m²/g is preferrable in the present invention since the WET grip performance and the snow performance of vulcanized rubbers are further improved. The content of carbon black to be blended in the rubber composition is not particularly limited, and may be, for example, 20 to 150 parts by mass, and may be 50 to 100 parts by mass per 100 parts by mass of the diene-based rubber.

The rubber composition according to the present invention may contain, in addition to the rubber component, the compound represented by the general formula (1), the silica and the carbon black, a vulcanizing agent, a vulcanization accelerator, an antiaging agent, stearic acid, the petroleum, a softener such as wax or oil, a processing aid, etc.

As the vulcanizing agent, sulfur can suitably be used. The sulfur may be ordinary sulfur for rubber, and sulfur such as powdered sulfur, precipitated sulfur, insoluble sulfur, or highly dispersible sulfur can be used. The content of the sulfur is preferably 0.5 to 5 parts by mass per 100 parts by mass of the rubber component in the rubber composition according to the present invention.

Examples of the vulcanization accelerator include vulcanization accelerators usually used for rubber vulcanization, such as a sulfenamide-based vulcanization accelerator, a thiuram-based vulcanization accelerator, a thiazole-based vulcanization accelerator, a thiourea-based vulcanization accelerator, a guanidine-based vulcanization accelerator, and a dithiocarbamic acid salt-based vulcanization accelerator, and these may be used singly or in an appropriate combination.

In the rubber composition according to the present invention, examples of the antiaging agent include antiaging agents usually used for rubber, such as an aromatic amine-based antiaging agent, an amine-ketone-based antiaging agent, a monophenol-based antiaging agent, a bisphenol-based antiaging agent, a polyphenol-based antiaging agent, a dithiocarbamic acid salt-based antiaging agent, and a thiourea-based antiaging agent, and these may be used singly or in an appropriate combination.

The rubber composition according to the present invention is obtained by kneading the rubber component, the compound represented by the general formula (1), the silica and the carbon black, and further a vulcanizing agent, a vulcanization accelerator, an antiaging agent, stearic acid, the petroleum, a softener such as wax or oil, a processing aid, etc. with the use of a kneading machine usually used in the rubber industry, such as a Banbury mixer, a kneader, or a roll.

A method for blending the above components is not limited, and any one of the following methods may be used: a method in which components to be blended other than vulcanization-type compounding agents such as a vulcanizing agent and a vulcanization accelerator are previously kneaded to prepare a master batch, the remaining components are added to the master batch, and the resultant is further kneaded, a method in which components are added in any order and kneaded, and a method in which all the components are added at the same time and kneaded.

### [Second embodiment]

The rubber composition according to the second embodiment of the present invention contains 0.1 to 10 parts by mass of a compound having an XLogP of 0.5 or more and 10 or less per 100 parts by mass of the rubber component containing styrene-butadiene rubber whose glass transition point is -70°C to -20°C and butadiene rubber. The content of the compound having an XLogP of 0.5 or more and 10 or less is more preferably 0.5 to 5 parts by mass per 100 parts by mass of the total amount of the rubber component.

Hereinafter, XLogP in the present invention will be described.

The lipid solubility of a compound is a factor that greatly affects not only solubility but also pharmacokinetics such as absorption and metabolism, and a representative descriptor representing the lipid solubility of a compound is LogP, which is an octanol/water partition coefficient. P of LogP is a concentration ratio in an equilibrium state between the organic layer (octanol layer) and the aqueous layer of the molecule, and a common logarithm thereof is LogP. A large number indicates that the concentration in the organic layer is high, which means that the lipid solubility is high. However, LogP has a practical problem, and for example, a value of LogP can be experimentally obtained for each compound, but is not so realistic in terms of time and cost, and the number of reported compounds is not so large. In addition, there is a disadvantage that the LogP value of a compound that has not yet been synthesized cannot be experimentally obtained.

In order to solve the above-mentioned problem of LogP, there is an approach of estimating LogP by decomposing a molecule into individual atoms and calculating a sum of respective contributions, and among the atom-based approaches, only the XLogP algorithm adds a correction term, and a latest model of the XLogP series is described in a paper "Computation of Octanol-Water Partition Coefficients by Guiding an Additive Model with Knowledge". The value of LogP listed in PubChem, a chemical molecules database, maintained and managed by the National Center for Biotechnology Information (NCBI), a division of the National Library of Medicine (NLM) under the National Institutes of Health (NIH), is the basis of XLogP.

In the present invention, the use of a naturally occurring compound as the compound having an XLogP of 0.5 or more and 10 or less is more preferred in terms of environmental protection. Examples of the naturally occurring compound include 3,4-dihydroxycinnamic acid (caffeic acid) (XLogP = 1.2), 3,4-dimethoxycinnamic acid (XLogP = 1.8), curcumin (XLogP = 3.2), sesamol (XLogP = 1.2), coumaric acid (XLogP = 1.5), cinnamic acid (XLogP = 2.1), rosmarinic acid (XLogP = 2.4), ferulic acid (XLogP = 1.5), sinapinic acid (XLogP = 1.5), and 4-(4-hydroxy-3-methoxyphenyl)-2-butanone (XLogP = 0.8). In the present invention, among these compounds, at least one of 3,4-dihydroxycinnamic acid (caffeic acid) and 3,4-dimethoxycinnamic acid is more preferably used from the viewpoint of improving the WET grip performance and snow performance of the vulcanized rubber. The reason why the use of at least one of 3,4-dihydroxycinnamic acid and 3,4-dimethoxycinnamic acid improves the WET grip performance and snow performance of the vulcanized rubber is not known, but there may be, for example, the following reasons (1) to (3).
(1) When 3,4-dihydroxycinnamic acid and/or 3,4-dimethoxycinnamic acid are added together with a zinc compound such as zinc oxide to the rubber composition used as a raw material, two or more molecules of 3,4-dihydroxycinnamic acid or 3,4-dimethoxycinnamic acid coordinate to zinc through hydroxy groups or methoxy groups at R₂ and R₃ positions in the rubber composition so that the molecular weight increases due to the formation of a complex;
(2) when two or more molecules of 3,4-dihydroxycinnamic acid or 3,4-dimethoxycinnamic acid form a complex, the tendency to aggregate in the rubber composition is further enhanced, so that the viscosity of the rubber composition is more effectively increased; and
(3) As a result of the viscosity increase of the rubber composition occurring more effectively, the reaction of the compound having an XLogP of 0.5 or more and 10 or less with the rubber component proceeds more effectively, so that the rubber hardness of the finally obtained vulcanized rubber is further increased, and the storage modulus E' of the vulcanized rubber at a low temperature (e.g. -5°C) can be further reduced while the tan δ, particularly tan δ (tan δ (0°C) at °C, is further increased. Consequently, the WET grip performance and the snow performance of vulcanized rubber may be further improved.

It is to be noted that a non-naturally occurring compound may be also used as the compound having an XLogP of 0.5 or more and 10 or less. Examples of the non-naturally occurring compound include 2,3-dimethoxycinnamic acid (XLogP = 1.8), 2,4-dimethoxycinnamic acid (XLogP = 1.8), 2,5-dimethoxycinnamic acid (XLogP = 1.8), 2,3,4-tritoxycinnamic acid (XLogP = 1.7), 3,4,5-tritoxycinnamic acid (XLogP = 1.4), protocatechuic acid (XLogP = 1.1), catechol (XLogP = 0.9), 5,5',6,6'-tetrahydroxy-3,3,3',3'-tetramethyl-1,1'-spirobiindane (XLogP = 5.1), carvacrol (XLogP = 3.1), 3,4-dimethoxyhydrocinnamic acid (XLogP = 1.2), and 5,6-dimethoxy-1-indanone (XLogP = 1.6).

The rubber composition of the present invention contains styrene-butadiene rubber whose glass transition point is -70°C to -20°C and butadiene rubber. When the total amount of the rubber component is set to 100 parts by mass, the blending amount of the styrene-butadiene rubber whose glass transition point is -70°C to -20°C is preferably 20 to 80 parts by mass, more preferably 40 to 70 parts by mass. When the total amount of the rubber component is set to 100 parts by mass, the blending amount of the butadiene rubber is preferably 20 to 80 parts by mass, more preferably 30 to 60 parts by mass. In the rubber composition according to the present invention, at least one of natural rubber and isoprene rubber are preferably contained as the rubber component, and the blending amount of one of natural rubber and isoprene rubber is preferably 5 to 30 parts by mass. In the rubber composition according to the present invention, as a rubber component, a diene-based rubber other than styrene-butadiene rubber whose glass transition point is -70°C to - 20°C, butadiene rubber, natural rubber and isoprene rubber, for example acrylonitrile-butadiene rubber (NBR), chloroprene rubber (CR), styrene-isoprene copolymer rubber, butadiene-isoprene copolymer, styrene-isoprene-butadiene copolymer rubber may be contained.

When the rubber composition according to the present invention contains silica, the WET gripping performance and snow performance of vulcanized rubbers are further improved, since dispersibility of silica in the rubber composition improves due to the compound having an XLogP of 0.5 or more and 10 or less. Examples of the silica to be used include silicas usually used for rubber reinforcement, such as wet silica, dry silica, sol-gel silica, and surface-treated silica. Among these, wet silica is preferred.

When silica is contained as a filler, a silane coupling agent is also preferably contained together. The silane coupling agent is not limited as long as sulfur is contained in the molecule thereof, and various silane coupling agents to be added to rubber compositions together with silica may be used. Examples of such silane coupling agents include: sulfidesilanes such as bis(3-triethoxysilylpropyl)tetrasulfide (e.g., "Si69" manufactured by Degussa), bis(3-triethoxysilylpropyl)disulfide (e.g., "Si75" manufactured by Degussa), bis(2-triethoxysilylethyl)tetrasulfide, bis(4-triethoxysilylbutyl)disulfide, bis(3-trimethoxysilylpropyl)tetrasulfide, and bis(2-trimethoxysilylethyl)disulfide; mercaptosilanes such as γ-mercaptopropyltrimethoxysilane, γ-mercaptopropyltriethoxysilane, mercaptopropylmethyldimethoxysilane, mercaptopropyldimethylmethoxysilane, and mercaptoethyltriethoxysilane; and protected mercaptosilanes such as 3-octanoylthio-1-propyltriethoxysilane and 3-propionylthiopropyltrimethoxysilane.

The rubber composition according to the present invention may contain, as a filler, carbon black. Examples of the carbon black that can be used include: carbon blacks usually used in the rubber industry, such as SAF, ISAF, HAF, FEF, and GPF; and conductive carbon blacks such as acetylene black and ketjen black. Among them, carbon black having N2SA of 140 to 250 m²/g is preferrable in the present invention since the WET grip performance and the snow performance of vulcanized rubbers are further improved. The content of carbon black to be blended in the rubber composition is not particularly limited, and may be, for example, 20 to 150 parts by mass, and may be 50 to 100 parts by mass per 100 parts by mass of the diene-based rubber.

The rubber composition according to the present invention may contain, in addition to the rubber component, the compound having an XLogP of 0.5 or more and 10 or less, the silica and the carbon black, a vulcanizing agent, a vulcanization accelerator, an antiaging agent, stearic acid, the petroleum, a softener such as wax or oil, a processing aid, etc.

As the vulcanizing agent, sulfur can suitably be used. The sulfur may be ordinary sulfur for rubber, and sulfur such as powdered sulfur, precipitated sulfur, insoluble sulfur, or highly dispersible sulfur can be used. The content of the sulfur is preferably 0.5 to 5 parts by mass per 100 parts by mass of the rubber component in the rubber composition according to the present invention.

Examples of the vulcanization accelerator include vulcanization accelerators usually used for rubber vulcanization, such as a sulfenamide-based vulcanization accelerator, a thiuram-based vulcanization accelerator, a thiazole-based vulcanization accelerator, a thiourea-based vulcanization accelerator, a guanidine-based vulcanization accelerator, and a dithiocarbamic acid salt-based vulcanization accelerator, and these may be used singly or in an appropriate combination.

In the rubber composition according to the present invention, examples of the antiaging agent include antiaging agents usually used for rubber, such as an aromatic amine-based antiaging agent, an amine-ketone-based antiaging agent, a monophenol-based antiaging agent, a bisphenol-based antiaging agent, a polyphenol-based antiaging agent, a dithiocarbamic acid salt-based antiaging agent, and a thiourea-based antiaging agent, and these may be used singly or in an appropriate combination.

The rubber composition according to the present invention is obtained by kneading the rubber component, the compound having an XLogP of 0.5 or more and 10 or less, the silica and the carbon black, and further a vulcanizing agent, a vulcanization accelerator, an antiaging agent, stearic acid, the petroleum, a softener such as wax or oil, a processing aid, etc. with the use of a kneading machine usually used in the rubber industry, such as a Banbury mixer, a kneader, or a roll.

A method for blending the above components is not limited, and any one of the following methods may be used: a method in which components to be blended other than vulcanization-type compounding agents such as a vulcanizing agent and a vulcanization accelerator are previously kneaded to prepare a master batch, the remaining components are added to the master batch, and the resultant is further kneaded, a method in which components are added in any order and kneaded, and a method in which all the components are added at the same time and kneaded.

The vulcanized rubber of the rubber composition according to the present invention is excellent in WET grip performance and snow performance. Therefore, the rubber composition according to the present invention is useful as a raw material for pneumatic tires. Furthermore, when the rubber composition is used as a raw material for a rubber part constituting a tread part of a snow tire, the WET grip performance and the snow performance of the finally produced pneumatic tire are extremely effectively exhibited, which is most useful.

### Examples

Hereinbelow, the configuration and effect of the present invention will be described with reference to specific examples etc.

### (Preparation of rubber compositions)

Rubber compositions of Examples 1 to 10 and Comparative Examples 1 to 3 were prepared according to formulations shown in Tables 1 to 2 and kneaded using a usual Banbury mixer. Compounding agents listed in Tables 1 to 2 are shown below (in Tables 1 to 2, the content of each of the compounding agents added is expressed in parts by mass per 100 parts by mass of the rubber component).
- Styrene-butadiene rubber 1; alkoxysilyl group and amino group end-modified solution-polymerized SBR, Tg = -33°C, manufactured by JSR, trade designation "HPR350"
- Styrene-butadiene rubber 2; unmodified SBR, Tg = -53°C, manufactured by JSR, trade designation "JSR1723"
- Styrene-butadiene rubber 3; unmodified SBR, Tg = -4°C, manufactured by Sumitomo Chemical Co., Ltd., "SE-6529"
- Butadiene rubber; manufactured by UBE Co., Ltd., "UBEPOL BR150B"
- Natural rubber ;RSS#3
- Silica; manufactured by TOSOH SILICA CORPORATION, trade name "Nipsil AQ"
- Silane coupling agent; Bis(3-triethoxysilylpropyl)tetrasulfide, "Si69" manufactured by Evonik Industries AG
- Carbon black; manufactured by Tokai Carbon Co., Ltd., trade name "Seast 3" (N2SA : 79m²/g)
- Paraffinic oil; manufactured by JX Nippon Oil & Energy Corporation, trade name "Process P200"
- Zinc white; manufactured by MITSUI MINING & SMELTING CO., LTD., trade name "Zinc white #3"
- Stearic acid; manufactured by Kao Corporation, trade name "LUNAC S-20"
- Antiaging agent; manufactured by Ouchi Shinko Chemical Industrial Co., Ltd., trade name: "Nocrac 6C"
- 3,4-Dimethoxycinnamic acid
- 3,4-Dihydroxycinnamic acid (caffeic acid)
- Acetamide cinnamic acid (compound not corresponding to compound represented by general formula (1))
- Sulfur; manufactured by Tsurumi Chemical Industry Co., ltd., trade name "Powder Sulfur"
- Vulcanization accelerator; manufactured by Ouchi Shinko Chemical Industrial Co., Ltd., trade name "NOCCELER CZ"

The tanδ (0°C) and storage modulus E' of the vulcanized rubber of each of the rubber compositions of Examples 1 to 10 and Comparative Examples 1 to 3 were evaluated by the following methods.

### <tanδ (0°C) of vulcanized rubber>

The rubber compositions of Examples 1 to 10 and Comparative Examples 1 to 3 were heated and vulcanized at 160°C for 30 minutes using a predetermined mold, and the thus obtained sample rubbers were used as measurement samples. The storage elastic modulus (E') and loss elastic modulus (E'') were measured for each measurement sample by a dynamic viscoelasticity measuring device (product name "Fully Automatic Viscoelasticity Analyzer VR-7110", manufactured by Ueshima Seisakusho Co., Ltd.) to measure tanδ (0°C). In Tables 1 to 2, the measured value was expressed as an index when the value of tanδ (0°C) in Comparative Example 1 is 100. The larger the index is, the better the WET grip performance is when used in the tread part of the pneumatic tire. Measurement conditions are as follows.
Size of measurement sample: length 40 mm, width 3 mm, thickness 2 mm
Measurement mode: Tensile mode
Measurement temperature: 0°C
Frequency: 100 Hz
Dynamic strain: 0.15%

### <Storage modulus E' of vulcanized rubber >

Rubber compositions of Examples 1-10 and Comparisons 1-3 were heated at 160°C for 30 minutes using the indicated molds, and the resulting sample rubber was used as the measurement sample. The viscoelastic testing machine of Oriental Refining Co. was used, and the storage modulus E' of frequency 10Hz, static strain of 10%, dynamic strain of ±0.25%, and temperature of-5°C were measured, and the value of comparative example 1 was shown as an index of 100. The smaller the exponent, the smaller the storage modulus E' and therefore the wider the touchdown area at low temperature, which means the superior snow performance.

**[Table 1]**

| | Comparative Example 1 | Comparative Example 2 | Comparative Example 3 | Example 1 | Example 2 | Example 3 | Example 4 |
|---|---|---|---|---|---|---|---|
| (Formulation) | | | | | | | |
| Styrene-butadiene rubber 1 | 50 | 50 | | 50 | 50 | 50 | 50 |
| Styrene-butadiene rubber 2 | | | | | | | |
| Styrene-butadiene rubber 3 | | | 50 | | | | |
| Butadiene rubber | 40 | 40 | 40 | 40 | 40 | 40 | 40 |
| Natural rubber | 10 | 10 | 10 | 10 | 10 | 10 | 10 |
| Silica | 70 | 70 | 70 | 70 | 70 | 70 | 70 |
| Silane coupling agent | 5.6 | 5.6 | 5.6 | 5.6 | 5.6 | 5.6 | 5.6 |
| Carbon black | 5 | 5 | 5 | 5 | 5 | 5 | 5 |
| Paraffinic oil | 15 | 15 | 15 | 15 | 15 | 15 | 15 |
| Zinc white | 3 | 3 | 3 | 3 | 3 | 3 | 3 |
| Stearic acid | 2 | 2 | 2 | 2 | 2 | 2 | 2 |
| Antiaging agent | 3 | 3 | 3 | 3 | 3 | 3 | 3 |
| 3,4-Dimethoxycinnamic acid (compound not corresponding to compound represented by general formula (1)) | | | 2 | 0.2 | 2 | 5 | |
| 3,4-Dihydroxycinnamic acid (compound not corresponding to compound represented by general formula (1)) | | | | | | | 2 |
| Acetamide cinnamic acid (compound not corresponding to compound represented by general formula (1)) | | 2 | | | | | |
| Sulfur | 2 | 2 | 2 | 2 | 2 | 2 | 2 |
| Vulcanization accelerator | 3 | 3 | 3 | 3 | 3 | 3 | 3 |

| (Physical properties (index)) | | | | | | | |
|---|---|---|---|---|---|---|---|
| storage modulus E' | 100 | 106 | 107 | 99 | 94 | 90 | 95 |
| tan δ (0°C) | 100 | 96 | 104 | 102 | 103 | 108 | 105 |

As can be seen from the results shown in Table 1, the vulcanized rubber of the rubber composition of Comparative Example 2 contains acetamide cinnamic acid that is a compound not corresponding to the compound represented by the general formula (1), and thus, when used in the tread part of the pneumatic tire, the WET grip performance and the snow performance are not improved. Also, it can be seen that the vulcanized rubber of the rubber composition of Comparative Example 3 contains Styrene-butadiene rubber whose Tg is -4°C, and thus, when used in the tread part of the pneumatic tire, the snow performance is not improved. On the other hand, it can be seen that when the vulcanized rubbers of the rubber compositions of Examples 1 to 3 are used in the tread part of the pneumatic tire, both the WET grip performance and the snow performance are improved in a well-balanced manner due to a synergistic effect of 3,4-dimethoxycinnamic acid corresponding to the compound represented by the general formula (1), styrene-butadiene rubber whose glass transition point is -70°C to -20°C and butadiene rubber. In addition, as can be seen from the results shown in Example 4, both the WET grip performance and the snow performance of the tread part of the pneumatic tire are improved in a well-balanced manner due to a synergistic effect of 3,4-dimethoxycinnamic acid corresponding to the compound represented by the general formula (1), styrene-butadiene rubber whose glass transition point is -70°C to -20°C and butadiene rubber.

**[Table 2]**

| | Comparative Example 1 | Example 5 | Example 6 | Example 7 | Example 8 | Example 9 | Example 10 |
|---|---|---|---|---|---|---|---|
| (Formulation) | | | | | | | |
| Styrene-butadiene rubber 1 | 50 | 50 | 50 | 60 | | 30 | 50 |
| Styrene-butadiene rubber 2 | | | | | 50 | | |
| Styrene-butadiene rubber 3 | | | | | | | |
| Butadiene rubber | 40 | 40 | 40 | 40 | 40 | 50 | 50 |
| Natural rubber | 10 | 10 | 10 | | 10 | 20 | |
| Silica | 70 | 40 | | 70 | 70 | 70 | 70 |
| Silane coupling agent | 5.6 | 3.2 | | 5.6 | 5.6 | 5.6 | 5.6 |
| Carbon black | 5 | 40 | 85 | 5 | 5 | 5 | 5 |
| Paraffinic oil | 15 | 15 | 15 | 15 | 15 | 15 | 15 |
| Zinc white | 3 | 3 | 3 | 3 | 3 | 3 | 3 |
| Stearic acid | 2 | 2 | 2 | 2 | 2 | 2 | 2 |
| Antiaging agent | 3 | 3 | 3 | 3 | 3 | 3 | 3 |
| 3,4-Dimethoxycinnamic acid (compound not corresponding to compound represented by general formula (1)) | | 2 | 2 | 2 | 2 | 5 | 5 |
| 3,4-Dihydroxycinnamic acid (compound not corresponding to compound represented by general formula (1)) | | | | | | | |
| Acetamide cinnamic acid (compound not corresponding to compound represented by general formula (1)) | | | | | | | |
| Sulfur | 2 | 2 | 2 | 2 | 2 | 2 | 2 |
| Vulcanization accelerator | 3 | 3 | 3 | 3 | 3 | 3 | 3 |

| (Physical properties (index)) | | | | | | | |
|---|---|---|---|---|---|---|---|
| storage modulus E' | 100 | 98 | 100 | 99 | 96 | 95 | 96 |
| tan δ (0°C) | 100 | 105 | 103 | 112 | 113 | 115 | 115 |

As can be seen from the results shown in Table 2, when the vulcanized rubbers of the rubber compositions of Examples 5 to 10 are used in the tread part of the pneumatic tire, both the WET grip performance and the snow performance are improved in a well-balanced manner even when the content of 3,4-dimethoxycinnamic acid corresponding to the compound represented by the general formula (1), the kind of the rubber component and the kind of filler are varied.

### (Preparation of rubber compositions)

Rubber compositions of Examples 11 to 23 and Comparative Examples 4 to 7 were prepared according to formulations shown in Tables 3 to 4 and kneaded using a usual Banbury mixer. Compounding agents listed in Tables 3 to 4 are shown below (in Tables 3 to 4, the content of each of the compounding agents added is expressed in parts by mass per 100 parts by mass of the rubber component).
- Styrene-butadiene rubber 1; alkoxysilyl group and amino group end-modified solution-polymerized SBR, Tg = -33°C, manufactured by JSR, trade designation "HPR350"
- Styrene-butadiene rubber 2; unmodified SBR, Tg = -53°C, manufactured by JSR, trade designation "JSR1723"
- Styrene-butadiene rubber 3; unmodified SBR, Tg = -4°C, manufactured by Sumitomo Chemical Co., Ltd., "SE-6529"
- Butadiene rubber; manufactured by UBE Co., Ltd., "UBEPOL BR150B"
- Natural rubber ;RSS#3
- Silica; manufactured by TOSOH SILICA CORPORATION, trade name "Nipsil AQ"
- Silane coupling agent; Bis(3-triethoxysilylpropyl)tetrasulfide, "Si69" manufactured by Evonik Industries AG
- Carbon black; manufactured by Tokai Carbon Co., Ltd., trade name "Seast 3" (N2SA : 79m²/g)
- Paraffinic oil; manufactured by JX Nippon Oil & Energy Corporation, trade name "Process P200"
- Zinc white; manufactured by MITSUI MINING & SMELTING CO., LTD., trade name "Zinc white #3"
- Stearic acid; manufactured by Kao Corporation, trade name "LUNAC S-20"
- Antiaging agent; manufactured by Sumitomo Chemical Co., Ltd., trade name: "Antigen 6C"
- 3,4-Dimethoxycinnamic acid (XLogP = 1.8)
- 3,4-Dihydroxycinnamic acid (XLogP = 1.2)
- Catechol (XLogP = 0.9)
- Cinnamic acid (XLogP = 2.1)
- 5,5',6,6'-Tetrahydroxy-3,3,3',3'-tetramethyl-1,1'-spirobiindane (XLogP = 5.1)
- Acetamide cinnamic acid (XLogP = 0)
- Tocopherol (XLogP = 10.7)
- Sulfur; manufactured by Tsurumi Chemical Industry Co., ltd., trade name "Powder Sulfur"
- Vulcanization accelerator; manufactured by Ouchi Shinko Chemical Industrial Co., Ltd., trade name "NOCCELER CZ"

The tanδ (0°C) and storage modulus E' of the vulcanized rubber of each of the rubber compositions of Examples 11 to 23 and Comparative Examples 4 to 7 were evaluated by the following methods.

### <tanδ (0°C) of vulcanized rubber>

The rubber compositions of Examples 11 to 23 and Comparative Examples 4 to 7 were heated and vulcanized at 160°C for 30 minutes using a predetermined mold, and the thus obtained sample rubbers were used as measurement samples. The storage elastic modulus (E') and loss elastic modulus (E'') were measured for each measurement sample by a dynamic viscoelasticity measuring device (product name "Fully Automatic Viscoelasticity Analyzer VR-7110", manufactured by Ueshima Seisakusho Co., Ltd.) to measure tanδ (0°C). In Tables 3 to 4, the measured value was expressed as an index when the value of tanδ (0°C) in Comparative Example 4 is 100. The larger the index is, the better the WET grip performance is when used in the tread part of the pneumatic tire. Measurement conditions are as follows.
Size of measurement sample: length 40 mm, width 3 mm, thickness 2 mm
Measurement mode: Tensile mode
Measurement temperature: 0°C
Frequency: 100 Hz
Dynamic strain: 0.15%

### <Storage modulus E' of vulcanized rubber >

Rubber compositions of Examples 11-23 and Comparisons 4-7 were heated at 160°C for 30 minutes using the indicated molds, and the resulting sample rubber was used as the measurement sample. The viscoelastic testing machine of Oriental Refining Co. was used, and the storage modulus E' of frequency 10Hz, static strain of 10%, dynamic strain of ±0.25%, and temperature of-5°C were measured, and the value of comparative example 4 was shown as an index of 100. The smaller the exponent, the smaller the storage modulus E' and therefore the wider the touchdown area at low temperature, which means the superior snow performance.

**[Table 3]**

| | Comparative Example 4 | Comparative Example 5 | Comparative Example 6 | Comparative Example 7 | Example 11 | Example 12 | Example 13 | Example 14 | Example 15 | Example 16 | Example 17 |
|---|---|---|---|---|---|---|---|---|---|---|---|
| (Formulation) | | | | | | | | | | | |
| Styrene-butadiene rubber 1 | 50 | 50 | 50 | | 50 | 50 | 50 | 50 | 50 | 50 | 50 |
| Styrene-butadiene rubber 2 | | | | | | | | | | | |
| Styrene-butadiene rubber 3 | | | | 50 | | | | | | | |
| Butadiene rubber | 40 | 40 | 40 | 40 | 40 | 40 | 40 | 40 | 40 | 40 | 40 |
| Natural rubber | 10 | 10 | 10 | 10 | 10 | 10 | 10 | 10 | 10 | 10 | 10 |
| Silica | 70 | 70 | 70 | 70 | 70 | 70 | 70 | 70 | 70 | 70 | 70 |
| Silane coupling agent | 5.6 | 5.6 | 5.6 | 5.6 | 5.6 | 5.6 | 5.6 | 5.6 | 5.6 | 5.6 | 5.6 |
| Carbon black | 5 | 5 | 5 | 5 | 5 | 5 | 5 | 5 | 5 | 5 | 5 |
| Paraffinic oil | 15 | 15 | 15 | 15 | 15 | 15 | 15 | 15 | 15 | 15 | 15 |
| Zinc white | 3 | 3 | 3 | 3 | 3 | 3 | 3 | 3 | 3 | 3 | 3 |
| Stearic acid | 2 | 2 | 2 | 2 | 2 | 2 | 2 | 2 | 2 | 2 | 2 |
| Antiaging agent | 3 | 3 | 3 | 3 | 3 | 3 | 3 | 3 | 3 | 3 | 3 |
| 3,4-Dimethoxycinna mic acid (XLogP = 1.8) | | | | 2 | 0.2 | 2 | 5 | | | | |
| 3,4-Dihydroxycinna mic acid (caffeic acid) (XLogP = 1.2) | | | | | | | | 2 | | | |
| Catechol (XLogP = 0.9) | | | | | | | | | 0.8 | | |
| Cinnamic acid (XLogP = 2.1) | | | | | | | | | | 1.1 | |
| 5,5',6,6'-tetrahydroxy-3,3,3',3'-tetramethyl-1,1'-spirobiindane (XLogP = 5.1) | | | | | | | | | | | 2.3 |
| Acetamidocinna mic acid (XLogP=0) | | 2 | | | | | | | | | |
| Tocopherol (XLogP=10.7) | | | 3.2 | | | | | | | | |
| Sulfur | 2 | 2 | 2 | 2 | 2 | 2 | 2 | 2 | 2 | 2 | 2 |
| Vulcanization accelerator | 3 | 3 | 3 | 3 | 3 | 3 | 3 | 3 | 3 | 3 | 3 |

| (Physical properties (index)) | | | | | | | | | | | |
|---|---|---|---|---|---|---|---|---|---|---|---|
| tan δ (0°C) | 100 | 96 | 97 | 104 | 102 | 103 | 108 | 105 | 105 | 101 | 101 |
| storage modulus E' | 100 | 106 | 110 | 107 | 99 | 94 | 90 | 95 | 95 | 94 | 97 |

As can be seen from the results shown in Table 3, the vulcanized rubber of the rubber composition of Comparative Example 5 contains acetamide cinnamic acid having an XLogP of 0, and thus, when used in the tread part of the pneumatic tire, the WET grip performance and the snow performance are not improved. It can be seen that the vulcanized rubber of the rubber composition of Comparative Example 6 contains tocopherol having an XLogP of 10.7, and thus, when used in the tread part of the pneumatic tire, the WET grip performance and the snow performance are not improved. Also, it can be seen that the vulcanized rubber of the rubber composition of Comparative Example 7 contains Styrene-butadiene rubber whose Tg is -4°C, and thus, when used in the tread part of the pneumatic tire, the snow performance is not improved. On the other hand, it can be seen that when the vulcanized rubbers of the rubber compositions of Examples 11 to 13 are used in the tread part of the pneumatic tire, both the WET grip performance and the snow performance are improved in a well-balanced manner due to a synergistic effect of 3,4-dimethoxycinnamic acid having an XLogP of 0.5 or more and 10 or less (XLogP = 1.8), styrene-butadiene rubber whose glass transition point is -70°C to -20°C and butadiene rubber. In addition, as can be seen from the results shown in Examples 14 to 17 whose rubber composition containing 3,4-dihydroxycinnamic acid (XLogP = 1.2), catechol (XLogP = 0.9), cinnamic acid (XLogP = 2.1), or 5,5',6,6'-tetrahydroxy-3,3,3',3'-tetramethyl-1,1'-spirobiindane (XLogP = 5.1), both the WET grip performance and the snow performance of the tread part of the pneumatic tire are improved in a well-balanced manner due to a synergistic effect of styrene-butadiene rubber whose glass transition point is -70°C to -20°C and butadiene rubber.

**[Table 4]**

| | Comparative Example 4 | Example 18 | Example 19 | Example 20 | Example 21 | Example 22 | Example 23 |
|---|---|---|---|---|---|---|---|
| (Formulation) | | | | | | | |
| Styrene-butadiene rubber 1 | 50 | 50 | 50 | 60 | | 30 | 50 |
| Styrene-butadiene rubber 2 | | | | | 50 | | |
| Styrene-butadiene rubber 3 | | | | | | | |
| Butadiene rubber | 40 | 40 | 40 | 40 | 40 | 50 | 50 |
| Natural rubber | 10 | 10 | 10 | | 10 | 20 | |
| Silica | 70 | 40 | | 70 | 70 | 70 | 70 |
| Silane coupling agent | 5.6 | 3.2 | | 5.6 | 5.6 | 5.6 | 5.6 |
| Carbon black | 5 | 40 | 85 | 5 | 5 | 5 | 5 |
| Paraffinic oil | 15 | 15 | 15 | 15 | 15 | 15 | 15 |
| Zinc white | 3 | 3 | 3 | 3 | 3 | 3 | 3 |
| Stearic acid | 2 | 2 | 2 | 2 | 2 | 2 | 2 |
| Antiaging agent | 3 | 3 | 3 | 3 | 3 | 3 | 3 |
| 3,4-Dimethoxycinnamic acid (XLogP = 1.8) | | 2 | 2 | 2 | 2 | 5 | 5 |
| 3,4-Dihydroxycinnamic acid (caffeic acid) (XLogP = 1.2) | | | | | | | |
| Catechol (XLogP = 0.9) | | | | | | | |
| Cinnamic acid (XLogP = 2.1) | | | | | | | |
| 5,5',6,6'-tetrahydroxy-3,3,3',3'-tetramethyl-1,1'-spirobiindane (XLogP = 5.1) | | | | | | | |
| Acetamidocinnamic acid (XLogP=0) | | | | | | | |
| Tocopherol (XLogP=10.7) | | | | | | | |
| Sulfur | 2 | 2 | 2 | 2 | 2 | 2 | 2 |
| Vulcanization accelerator | 3 | 3 | 3 | 3 | 3 | 3 | 3 |

| (Physical properties (index)) | | | | | | | |
|---|---|---|---|---|---|---|---|
| tan δ (0°C) | 100 | 105 | 103 | 112 | 113 | 115 | 115 |
| storage modulus E' | 100 | 98 | 100 | 99 | 96 | 95 | 96 |

As can be seen from the results shown in Table 4, when the vulcanized rubbers of the rubber compositions of Examples 18 to 23 are used in the tread part of the pneumatic tire, both the WET grip performance and the snow performance are improved in a well-balanced manner even when the content of 3,4-dimethoxycinnamic acid (XLogP = 1.8), the kind of the rubber component and the kind of filler is varied.

## Claims

1. A rubber composition comprising, per 100 parts by mass of a rubber component containing styrene-butadiene rubber whose glass transition point is -70°C to -20°C and butadiene rubber, 0.1 to 10 parts by mass of a compound represented by the following general formula (1): 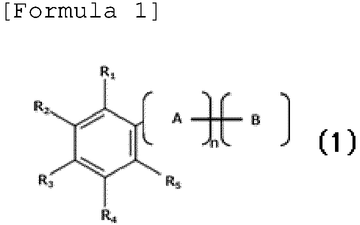 wherein at least one of R₁ to R₅ is an -OH group or an -OCH₃ group and others are each an -H group or a hydrocarbon group having 1 to 20 carbon atoms, A is an unsaturated bond or an alkylene group having 1 to 20 carbon atoms and optionally having an -H group, a -CH₃ group, an -NH₂ group, an -O- group, or an -OH group, n is an integer of 0 to 10, and B is a -COOH group, an -OH group, or an =O group and optionally forms a ring structure with adjacent R₁ or R₅.

2. The rubber composition according to claim 1, comprising 20 to 150 parts by mass of carbon black per 100 parts by mass of the rubber component.

3. The rubber composition according to claim 1 or 2, further comprising at least one of natural rubber and isoprene rubber as the rubber component.

4. The rubber composition according to any one of claims 1 to 3, wherein the compound represented by the general formula (1) is a naturally occurring compound.

5. The rubber composition according to any one of claims 1 to 4, wherein the compound represented by the general formula (1) is at least one of 3,4-dihydroxycinnamic acid and 3,4-dimethoxycinnamic acid.

6. A pneumatic tire comprising a rubber part containing a vulcanized rubber of the rubber composition according to any one of claims 1 to 5.

7. A snow tire comprising a tread part containing a vulcanized rubber of the rubber composition according to any one of claims 1 to 5.

8. A rubber composition comprising, per 100 parts by mass of a rubber component containing styrene-butadiene rubber whose glass transition point is -70°C to -20°C and butadiene rubber, 0.1 to 10 parts by mass of a compound having an XLogP of 0.5 or more and 10 or less.

9. The rubber composition according to claim 8, comprising 20 to 150 parts by mass of carbon black per 100 parts by mass of the rubber component.

10. The rubber composition according to claim 8 or 9, further comprising at least one of natural rubber and isoprene rubber as the rubber component.

11. The rubber composition according to any one of claims 8 to 10, wherein the compound having an XLogP of 0.5 or more and 10 or less is a naturally occurring compound.

12. The rubber composition according to any one of claims 8 to 11, wherein the compound having an XLogP of 0.5 or more and 10 or less is at least one of 3,4-dihydroxycinnamic acid and 3,4-dimethoxycinnamic acid.

13. A pneumatic tire comprising a rubber part containing a vulcanized rubber of the rubber composition according to any one of claims 8 to 12.

14. A snow tire comprising a tread part containing a vulcanized rubber of the rubber composition according to any one of claims 8 to 12.
